# FASCICULE DE BREVET EUROPEEN

(11) **EP 2 858 072 B1**
(45) Date de publication et mention de la délivrance du brevet: **13.04.2016**
(21) Numéro de dépôt: 14187147.5
(22) Date de dépôt: 30.09.2014
(51) Int. Cl.: G21C 17/06, G21C 17/112, G01N 25/16, G21C 19/08

(54) **Dispositif pour générer un gradient élevé de température dans un échantillon et comprenant des moyens optiques de contrôle**
Vorrichtung mit optischen Kontrollmitteln zur Erzeugung eines hohen Temperaturgradienten in einer Probe
Device for generating a high temperature gradient in a sample, including optical control means

(30) Priorité: 03.10.2013 FR 1359586
(43) Date de publication de la demande: 08.04.2015
(73) Titulaire: COMMISSARIAT A L'ENERGIE ATOMIQUE ET AUX ENERGIES ALTERNATIVES, 75015 Paris (FR)
(72) Inventeur: Pontillon, Yves, 04860 PIERREVERT (FR); Hanus, Eric, 04100 MANOSQUE (FR); Capdevila, Hélène, 13540 PUYRICARD (FR)
(74) Mandataire: Esselin, Sophie

(56) Documents cités:
- FR-A- 2 720 503
- US-A- 4 643 866
- US-A1- 2008 023 141

## Description

Le domaine de l'invention est celui des dispositifs de chauffage comportant la génération contrôlée de gradient thermique au sein d'un échantillon, trouvant notamment un intérêt particulier pour contrôler et caractériser le comportement des combustibles nucléaires sous gradient thermique et qui soit utilisable en laboratoire de haute activité nucléaire.

Dans ce domaine il a déjà été proposé par le Demandeur de produire un gradient thermique par un chauffage électrique au coeur des combustibles et une circulation d'eau à l'extérieur du gainage de ces combustibles. Néanmoins, ce dispositif n'a pas été utilisé sur combustibles nucléaires irradiés.

Il est également connu du brevet US 4,643,866, des moyens permettant de fournir un gradient thermique assuré par un chauffage au coeur de céramiques combustibles à l'aide de micro-ondes et une circulation d'eau à l'extérieur du gainage de ces céramiques.

La publication Nuclear Engineering and Design 26, (1974) 423-431, J.F. Whatham décrit par ailleurs, un chauffage électrique des céramiques avec un refroidissement par circulation d'eau pressurisée.

Le brevet FR 2 720 503 décrit un système de caractérisation thermomécanique de matériaux utilisant un dispositif de chauffage rapide par induction.

Actuellement, les quelques expériences de gradient thermique présentées, réalisées sur crayon combustible ont été menées sur des matériaux non irradiés en atmosphère inerte. Or les effets de l'irradiation impactent rapidement (en moins d'un cycle de réacteur à eau sous-pression : REP) les propriétés mécaniques et chimiques de la pastille et de la gaine ainsi que leur interface, modifiant de manière significative le comportement du combustible nucléaire.

Or, dans le cadre des gestions de combustibles tels que le MOX à haute teneur en Plutonium avec un vecteur isotopique dégradé, le combustible MOX (pour « Mélanges d'Oxydes ») contenant du dioxyde de plutonium PuO₂ et du dioxyde d'uranium UO₂, fabriqué à partir d'environ 7 % de plutonium et 93 % d'uranium, la connaissance des phénomènes de transfert des produits de fission, notamment gazeux, au sein du combustible et des conditions de relâchement, nécessite d'être approfondie.

Plus précisément, dans les réacteurs nucléaires actuels, exploités par EDF, les combustibles se présentent sous la forme de pastilles UO₂ ou (U,Pu)O₂ empilées dans une gaine en alliage de Zirconium. Lors de l'irradiation, il se produit notamment en raison de phénomènes thermomécaniques, une interaction entre les pastilles et la gaine (aussi appelée Interaction Pastille Gaine : IPG). Or, dans certaines conditions accidentelles de transitoires de puissance, le combustible peut subir en son coeur un incrément important et rapide de température par rapport à sa situation normale, alors que la gaine enveloppant ce combustible ne subit pas nécessairement une telle variation température. Ce phénomène conduit à un gradient thermique important entre le coeur du combustible et la gaine du combustible. Ce transitoire thermique provoque donc une augmentation de la contrainte de la pastille sur la gaine et peut conduire à sa rupture. La gaine étant la première barrière de confinement aux produits de fission, il est indispensable de garantir son intégrité et donc de connaître au mieux ces phénomènes d'IPG.

Il est donc particulièrement intéressant de réaliser des expériences analytiques capables de simuler le gradient thermique subi par un combustible ou un échantillon de combustible nucléaire lors de différents « transitoires » de puissance et plus précisément de disposer d'un dispositif de caractérisation du comportement des combustibles nucléaires sous gradient thermique qui soit utilisable en laboratoire de haute activité. Autrement dit, il est donc également nécessaire de suivre les déformations subies par l'échantillon de combustible, du fait de ce gradient thermique.

De telles expériences analytiques peuvent permettre de sélectionner des matériaux en vue d'obtenir un combustible ne conduisant pas à la rupture de la première barrière de confinement lors de certaines conditions accidentelles de transitoires de puissance.

Dans ce cadre, le Demandeur a développé un dispositif expérimental nommé DURANCE (Dispositif simulant le compoRtement sous grAdieNt thermique des CombustiblEs). Ce dispositif DURANCE comporte un gradient thermique au sein de l'échantillon, assuré par un mandrin chauffant inséré à coeur et un système de matériaux isolants refroidis par un dispositif annexe. L'amplitude du gradient thermique entre le coeur de l'échantillon et la face externe de la gaine est, par conséquent, pilotée par le niveau de température à coeur et la nature, l'épaisseur et la température externe des isolants.

Dans ce contexte, le Demandeur a cherché à mettre au point un dispositif permettant de reproduire et de maîtriser l'amplitude du gradient thermique subi par le combustible nucléaire lors de certaines situations accidentelles, et ce, grâce à une installation de dimension réduite facilement adaptable aux fours de traitement thermiques utilisés par le laboratoire en cellule de haute activité, et en s'affranchissant de toute circulation d'eau (pressurisée ou non) au contact de l'élément combustible, le chauffage étant assuré par induction. Il a également cherché à rendre ce dispositif compatible avec des moyens de mesure en ligne et in situ des déformations subies par l'échantillon combustible, en particulier des moyens de mesure optiques. Le développement d'un système de chauffage par induction pour un échantillon typiquement de deux à trois pastilles de combustible, assurant un flux thermique de l'intérieur vers l'extérieur de celles-ci permet de représenter le profil de température observé en réacteur. Il est destiné à permettre de faire progresser la problématique liée au risque de rupture de gaine par Interaction Pastille-Gaine (IPG) et/ou Corrosion sous Contrainte (CSC) des crayons combustibles en situation incidentelle, le nombre limité d'essais intégraux de rampe de puissance ne permettant pas de tester individuellement l'ensemble des paramètres et nuances de combustible ni d'accéder de façon découplée aux phénomènes physiques. Or certains mécanismes clés intervenant dans le phénomène d'interaction de la pastille avec la gaine sont encore mal connus et constituent un facteur limitant pour la compréhension des rampes et la représentativité des modèles numériques simulant l'IPG. Ceci conduit actuellement à prendre des marges importantes pour éviter la rupture de gaine.

Un des objectifs important du dispositif proposé dans la présente invention est donc de reproduire et de maîtriser l'amplitude du gradient thermique subi par un combustible nucléaire lors de certaines situations accidentelles et ce grâce à une installation de dimension réduite facilement adaptable aux fours de traitement thermiques utilisés par un laboratoire en cellule de haute activité et ce en s'affranchissant de toute circulation d'eau (pressurisée ou non) au contact de l'élément combustible, le chauffage étant assuré par induction. Cet objectif est atteint par un ensemble comprenant un échantillon et un dispositif pour générer un gradient élevé de température dans ledit échantillon comprenant :
- une enceinte à l'intérieur de laquelle est placé ledit échantillon ;
- une résistante traversant ledit échantillon ;
- des premiers moyens d'induction en périphérie de l'enceinte pour créer un champ électromagnétique ;
- des seconds moyens d'induction connectés à la résistance et capables de capter ledit champ électromagnétique de manière à créer un courant induit circulant dans ladite résistance.

Cependant, un autre objectif essentiel pour la compréhension des phénomènes décrits ci-dessus est de pouvoir mesurer en ligne et in situ les déformations subies par l'échantillon et les quantifier. Or l'ensemble décrit ci-dessus, ainsi que la surface à étudier imposent de nombreuses contraintes pour la mesure. En effet, le but est de détecter et quantifier les déformations présentant une amplitude allant de quelques micromètres à une centaine de micromètres, amplitude faible comparée à la distance de travail minimale (10 cm), ce, avec les contraintes de travail en milieu nucléaire, et dans un espace réduit.

L'analyse des déformations subies par l'échantillon dans l'ensemble décrit ci-dessus ne peut être réalisée qu'a posteriori et à l'extérieur de cet ensemble, ce qui ne permet pas de relier ces déformations aux paramètres d'essai.

Le dispositif de la présente invention constitue notamment une solution pouvant permettre de porter un échantillon de combustible à une température centrale pouvant atteindre 2000°C, voire plus, tout en stabilisant la température de la gaine aux alentours de 350°C +/- 50°C sur un échantillon de combustible, cette solution devant permettre la mesure optique en ligne et in situ des déformations subies par l'échantillon dans les conditions extrêmes indiquées ci-dessus, et leur quantification.

Plus précisément, la présente invention a pour objet un ensemble comprenant un échantillon et un dispositif pour générer un gradient élevé de température dans ledit échantillon comprenant :
- une enceinte à l'intérieur de laquelle est placé ledit échantillon ;
- une résistante traversant ledit échantillon ;
- des premiers moyens d'induction en périphérie de l'enceinte pour créer un champ électromagnétique ;
- des seconds moyens d'induction disposés à l'intérieur de l'enceinte, connectés à la résistance et capables de capter ledit champ électromagnétique de manière à créer un courant induit circulant dans ladite résistance,
caractérisé en ce que l'enceinte est transparente aux longueurs d'ondes visibles et en ce que les premiers moyens d'induction comprennent au moins une première bobine comprenant des éléments de bobinage (ou spires) dont au moins certains présentent un écartement minimal d de 2 mm, cet espacement étant adapté pour la visée d'un moyen optique de mesure de la déformation.

Selon une variante de l'invention, les seconds moyens d'induction comprennent au moins une seconde bobine.

Selon une variante de l'invention, l'enceinte est un tube de quartz.

Selon une variante de l'invention, l'échantillon comprend une pastille de céramique pouvant être de Al₂O₃, ou du ZrO₂ ou une pastille de combustible nucléaire pouvant être de l'UO₂ ou du MOX.

Selon une variante de l'invention, l'échantillon comprend une gaine métallique en périphérie de ladite pastille et en contact direct avec ladite pastille.

Selon une variante de l'invention, il comprend en outre un élément isolant thermique transparent aux longueurs d'onde visibles en périphérie dudit échantillon.

Selon une variante de l'invention, l'élément isolant thermique transparent est en saphir.

Selon une variante de l'invention, l'élément isolant thermique transparent est en verre.

Selon une variante de l'invention, l'élément isolant thermique transparent est en diamant.

Selon une variante de l'invention, la résistance est en métal réfractaire pouvant être en tungstène ou en molybdène.

Selon une variante de l'invention, ledit ensemble comprend en outre un échangeur, lesdits seconds moyens d'induction étant situés en périphérie dudit échangeur.

Dans un mode préféré, l'échangeur comporte une encoche ou une fenêtre transparente, l'un ou l'autre étant adapté pour la visée d'un moyen de mesure de la déformation.

Selon une variante de l'invention, l'échangeur comprend un système de circulation de fluide.

Selon une variante de l'invention, ledit ensemble comprend en outre des moyens de mesure de la température dudit échantillon.

Selon une variante de l'invention, les moyens de mesure de la température comprennent un thermocouple.

Selon une variante de l'invention, les moyens de mesure de la température comprennent un pyromètre.

Selon une variante de l'invention, les moyens de mesure de la température comprennent une caméra infrarouge.

L'invention sera mieux comprise et d'autres avantages apparaîtront à la lecture de la description qui va suivre donnée à titre non limitatif et grâce aux figures annexées parmi lesquelles :
- la figure 1 illustre un dispositif selon l'état de la technique ;
- la figure 2 illustre un dispositif selon l'invention ;
- les figures 3a et 3b illustrent des modèles géométriques de l'ensemble : pastille de combustible entouré d'isolant, chauffé notamment par un mandrin métallique dans un dispositif de l'invention ;
- la figure 4 illustre le modèle thermique d'élément fini pour une pastille de combustible entourée d'isolant ;
- la figure 5 illustre une vue éclatée de différents éléments compris dans un exemple de dispositif de l'invention ;
- la figure 6 illustre un exemple de cycle de températures appliquées au niveau de la résistance centrale dans un dispositif de l'invention.

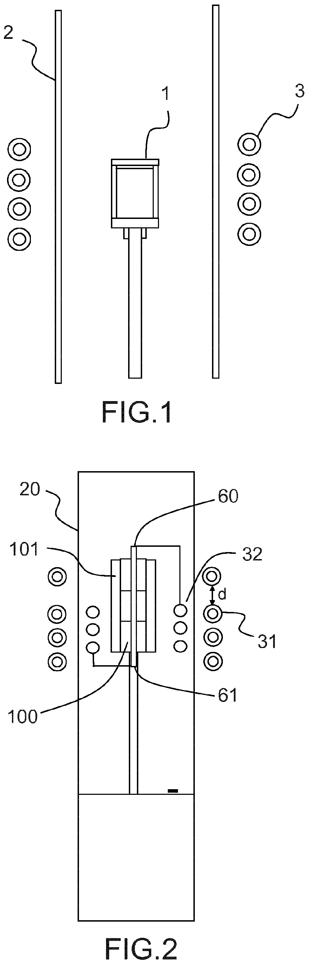

Le Demandeur a développé un four de chauffage tel que celui illustré en figure 1 permettant de chauffer un creuset métallique par couplage inductif. Des spires dites d'induction 3 traversées par un courant haute fréquence permettent de créer des courants induits dans le creuset métallique 1. Par effet Joule, ces courants induits chauffent ainsi les parois du creuset, qui lui-même porte un échantillon à haute température de façon isotherme, le creuset étant lui-même placé dans un tube 2. Le tube 2 est par exemple en quartz.

Néanmoins, l'utilisation d'un tel four de chauffage par induction ne peut pas être directement transcrite au dispositif DURANCE. En effet, utiliser la résistance insérée au centre de l'échantillon à chauffer comme suscepteur (manière générale, le suscepteur doit être un conducteur électrique) vis-à-vis de l'induction n'est pas envisageable car la gaine en alliage de Zirconium (qui est donc un élément métallique et par conséquent très conducteur), située entre le centre des pastilles et la spire, subirait le couplage. Dans la configuration du four de chauffage illustré par la figure 1, la gaine serait donc chauffée de la même façon que l'est le creuset métallique.

Afin de pouvoir se servir du champ électromagnétique créé par des premiers moyens d'induction pouvant être une spire d'induction pour chauffer le système résistif central, la solution proposée dans la présente invention adapte le principe d'un transformateur électrique.

Le champ électromagnétique est ainsi selon la présente invention, capté par des premiers moyens d'induction pouvant être une spire (bobine) dite de transformation. Cette spire crée alors un courant dit induit qui circule dans la résistance. Cette spire est placée à l'intérieur du tube 2 et centrée par rapport à la spire d'induction.

Ce dispositif permet bien de garder le même système d'apport de puissance que le four de chauffage de la figure 1. Il permet également de conserver le tube 2 par exemple en quartz qui garantit l'étanchéité du four et qui, par ses propriétés physico-chimiques, n'interagit pas sur le phénomène de couplage.

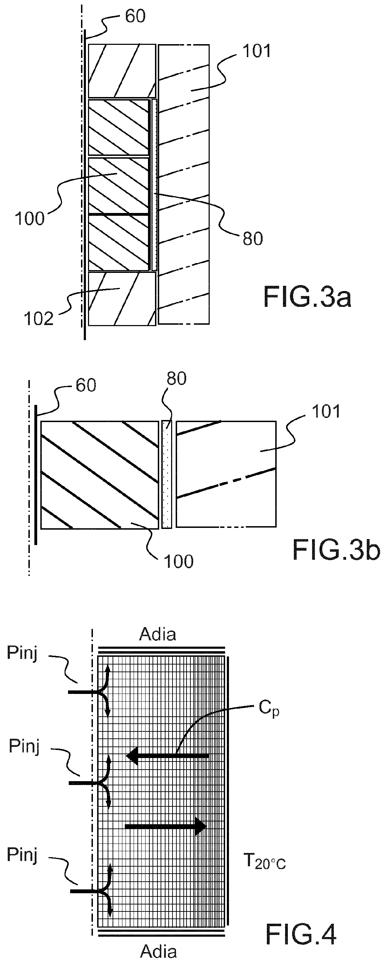

La figure 2 illustre ainsi un dispositif de l'invention comprenant dans une enceinte 20, une résistance 60, une première spire dite spire d'induction 31 et une seconde spire dite de transformation 32. L'échantillon à échauffer 100 est entouré, d'une gaine 80 représentée en figures 3a et 3b et d'un isolant 101 et est traversé par la résistance 60 en son centre. Un thermocouple 61 est également prévu pour la mesure de température. La spire de transformation 32 est reliée mécaniquement à la résistance 60 de façon à assurer la conduction de la chaleur de la spire 32 vers la résistance 60.

La spire d'induction 31 présente au moins des éléments de bobinage présentant un écartement minimal d de 2 mm entre lesdits éléments. Sur l'exemple représenté, seule une partie des éléments de bobinage présente cet écartement minimal, mais il est tout aussi possible d'avoir le même écartement minimal sur l'ensemble de la spire d'induction 31.

L'isolant 101 est dans un matériau transparent, par exemple saphir, verre, diamant.

Cette configuration permet à un dispositif optique d'atteindre la gaine pour réaliser la mesure de déformations de l'échantillon en ligne et in situ, et de relier ainsi la déformation aux paramètres d'essai, permettant ainsi une meilleure compréhension des phénomènes physiques.

Le dispositif de la présente invention permet ainsi de venir chauffer par couplage inductif l'élément métallique qu'est la résistance 60, et ensuite par échauffement résistif de la résistance 60, de chauffer l'intérieur des pastilles.

Pour que ce principe fournisse un chauffage plus homogène au sein de l'empilement des pastilles de combustible, on peut avantageusement doubler les spires de couplage et venir chauffer par induction deux éléments métalliques de part et d'autre.

### Validation thermique du système de chauffage résistif

De manière générale, le dispositif DURANCE cherche à appliquer un gradient thermique radial connu et prédéterminé au sein d'une céramique nucléaire irradiée. Afin de valider le concept envisagé, le Demandeur a modélisé sous Cast3m le comportement thermique du dispositif de l'invention. Cette modélisation a permis, dans un premier temps, et au travers d'une étude paramétrique la plus simple possible, de confirmer la présence d'un gradient radial au sein des pastilles et de spécifier la nature et la géométrie des isolants pour obtenir le gradient thermique souhaité. Cette analyse détaille les hypothèses posées pour obtenir un modèle simplifié de DURANCE (définition du modèle géométrique, définition du modèle thermique, ...). Les résultats obtenus ont été confrontés aux objectifs voulus pour conclure sur la validité du concept. Il a été décidé de modéliser le dispositif DURANCE de façon axisymétrique dans un premier temps sur un empilement de trois pastilles puis, pour simplifier encore le modèle, sur seulement la pastille centrale en négligeant les effets de bord des deux pastilles d'extrémités. Il est alors considéré qu'il n'y a pas d'échange thermique sur les faces inférieure et supérieure (condition adiabatique). Les figures 3a et 3b illustrent les différents éléments représentés en coupe depuis la résistance centrale 60 : il s'agit plus précisément depuis le centre de l'échantillon vers l'extérieur de la pastille : de combustible 100 placé entre deux cales 102, de la gaine 80, de l'isolant 101. Il est également considéré que les jeux sont nuls entre les pastilles et la gaine mais aussi entre la gaine et l'isolant. Le contact étant considéré comme parfait entre ces éléments, un seul mode de transfert de chaleur est considéré : la conduction.

Le circuit de refroidissement est modélisé par une température imposée à 20°C correspondant à la température de l'eau circulant dans l'échangeur comme illustré en figure 4 qui met en évidence, selon le modèle thermique, la puissance volumique injectée Pᵢₙⱼ et la conduction Cₚ quasi parfaite entre les différents matériaux (pastille, gaine, isolant), entre deux adiabatiques A_{dia}.

A partir de cette modélisation thermique permettant de valider l'obtention d'un gradient thermique et un principe de chauffage a priori adéquat, le Demandeur a réalisé un prototype afin de vérifier le principe général et le bon fonctionnement, notamment le chauffage résistif et l'obtention d'un gradient thermique par le biais des différents isolants et de l'utilisation d'un système de refroidissement, et la possibilité de réaliser une mesure optique de ces déformations.

Pour permettre la réalisation de ce prototype, les différents éléments ont été requis :
- une résistance 60 permettant d'atteindre les températures souhaitées sans trop de déformations de celle-ci ;
- des pastilles percées pour accueillir la résistance, comme échantillon ;
- une gaine 80 en zircaloy4 (zirconium) d'une hauteur de trois pastilles percées et des cales d'extrémités ;
- un jeu d'isolants transparents 101 ;
- deux spires, l'une de transformation 32 pour permettre la circulation des courants induits dans la résistance, une spire d'induction 31 ;
- un échangeur de chaleur 40 muni d'une fenêtre de visée transparente 41 afin de bloquer la température extérieure de l'isolant à la température de circulation de l'eau (soit 20°C).

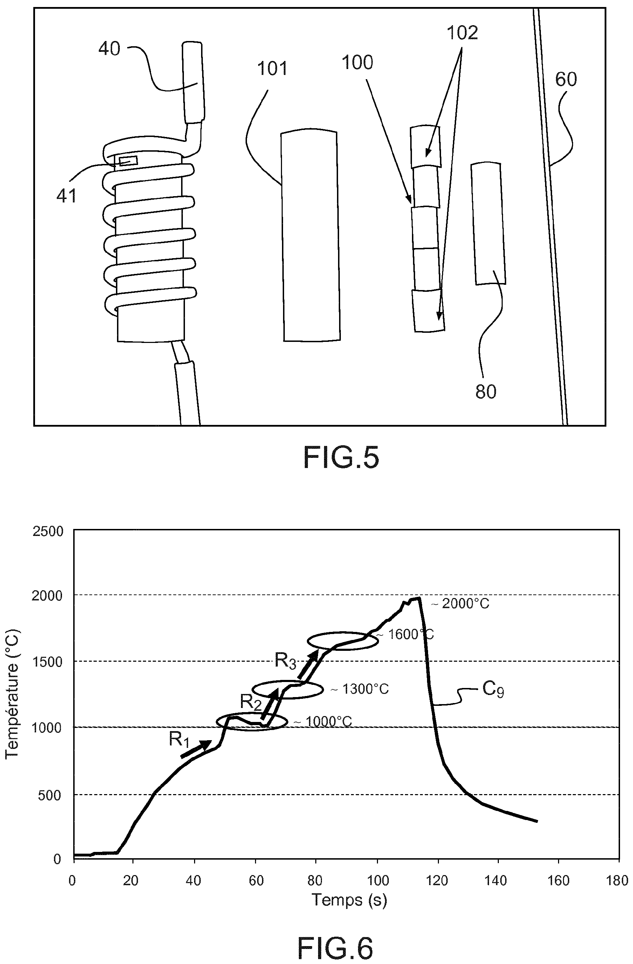

Ces éléments sont présentés sur la figure 5 : la résistance centrale en tungstène 60, la gaine 80, les trois pastilles de combustibles 100 insérées entre deux cales 102, l'isolant 101 et un échangeur à eau 40, ces différents éléments s'imbriquent les uns dans les autres formant alors le système complet permettant, à l'aide des spires, de faire chauffer les pastilles de combustible tout en refroidissant la gaine par le circuit de refroidissement.

L'isolant 101 est dans un matériau transparent, par exemple en saphir, en verre ou en diamant.

L'échangeur 40 présente une ouverture transparente 41, par exemple une encoche sur l'échangeur ayant subi un usinage adapté à la fenêtre.

L'ensemble est intégré dans la spire de transformation 32.

L'ensemble ainsi constitué peut être intégré dans un tube 2 en quartz constituant une évolution du four de chauffage de la figure 1 et de l'ensemble comprenant un échantillon et un dispositif pour générer un gradient élevé de température dans ledit échantillon comprenant :
- une enceinte à l'intérieur de laquelle est placé ledit échantillon ;
- une résistante traversant ledit échantillon ;
- des premiers moyens d'induction en périphérie de l'enceinte pour créer un champ électromagnétique ;
- des seconds moyens d'induction connectés à la résistance et capables de capter ledit champ électromagnétique de manière à créer un courant induit circulant dans ladite résistance.

La spire d'induction 31 couple alors sur la spire de transformation 32, celle-ci est court-circuitée par la résistance transparente 40, traversant l'échantillon 100. La spire de transformation 32, la spire d'induction 31 et l'échangeur 40 sont quant à eux refroidis par eau.

Un thermocouple 61 représenté en figure 2 est monté au contact de la résistance pour observer son comportement lors de la mise en puissance du dispositif.

La figure 6 illustre les cycles de température appliqués au niveau de la résistance. Trois rampes différentes ont été appliquées et quatre plateaux en température (1000°C, 1300°C, 1600°C et 2000°C) ont été maintenus entre les rampes R₁, R₂ et R₃, la courbe C₉ étant relative à la température du suscepteur. La température de la résistance est volontairement limitée à une température de 2000°C sur un temps très court.

Ces mesures valident le principe de chauffage proposé dans la présente invention, permettant des rampes de température plus ou moins rapides, avec des paliers de température dans les gammes requises.

On comprend que l'ensemble selon l'invention permet de réaliser des gradients de températures entre l'intérieur et l'extérieur d'un échantillon adapté pour la mesure en ligne et in situ des déformations subies par l'échantillon, et ce, dans les conditions extrêmes de l'environnement de travail.

Une application d'un tel ensemble peut être la qualification du combustible nucléaire.

D'autres applications sont la qualification d'autres matériaux dans des conditions extrêmes ou dans lesquels il est important d'avoir à chauffer un matériau et à mesurer ses déformations en ligne et in situ dans un espace réduit.

## Revendications

1. Ensemble comprenant un échantillon (100) et un dispositif pour générer un gradient élevé de température dans ledit échantillon comprenant :
- une enceinte (20) à l'intérieur de laquelle est placé ledit échantillon ;
- une résistante (60) traversant ledit échantillon ;
- des premiers moyens d'induction (31) en périphérie de l'enceinte (20) pour créer un champ électromagnétique ;
- des seconds moyens d'induction (32) disposés à l'intérieur de l'enceinte (20), connectés à la résistance (60) et capables de capter ledit champ électromagnétique de manière à créer un courant induit circulant dans ladite résistance ;
**caractérisé en ce que** l'enceinte est transparente aux longueurs d'ondes visibles et **en ce que** les premiers moyens d'induction comprennent au moins une première bobine comprenant des éléments de bobinage (ou spires) dont au moins certains sont espacés d'une distance (d) de 2 mm, cet espacement étant adapté pour la visée d'un moyen optique de mesure de la déformation.

2. Ensemble selon la revendication 1, **caractérisé en ce que** l'enceinte (20) est un tube de quartz.

3. Ensemble selon l'une des revendications 1 ou 2, **caractérisé en ce qu'**il comprend en outre un élément isolant thermique transparent (101) en périphérie dudit échantillon.

4. Ensemble selon la revendication 3, caractérisé en que l'élément isolant thermique transparent (101) est en saphir.

5. Ensemble selon la revendication 3, **caractérisé en ce que** l'isolant thermique transparent (101) est en verre.

6. Ensemble selon la revendication 3, **caractérisé en ce que** l'isolant thermique transparent (101) est en diamant.

7. Ensemble selon l'une des revendications précédentes, **caractérisé en ce qu'**il comprend en outre un échangeur (40), lesdits seconds moyens d'induction (32) étant situés en périphérie dudit échangeur, l'échangeur (40) comportant une encoche ou une fenêtre transparente (41), l'un ou l'autre étant adapté pour la visée d'un moyen de mesure de la déformation.

## Patentansprüche

1. Baugruppe, die eine Probe (100) und eine Vorrichtung zum Erzeugen eines erhöhten Temperaturgradienten in der Probe umfasst, Folgendes umfassend:
- ein Gehäuse (20), in dessen Innerem die Probe platziert ist;
- einen durch die Probe verlaufenden Widerstand (60);
- erste Induktionsmittel (31) an der Peripherie des Gehäuses (20), um ein elektromagnetisches Feld zu erzeugen;
- zweite Induktionsmittel (32), die im Innern des Gehäuses (20) angeordnet sind, mit dem Widerstand (60) verbunden sind und die das elektromagnetische Feld erfassen können, um einen induzierten Strom zu erzeugen, der in dem Widerstand zirkuliert;
**dadurch gekennzeichnet, dass** das Gehäuse für sichtbare Wellenlängen transparent ist, und dadurch, dass die ersten Induktionsmittel wenigstens eine erste Spule umfassen, die Wicklungselemente (oder Windungen) umfasst, von denen wenigstens einige um eine Distanz (d) von 2 mm beabstandet sind, wobei diese Beabstandung an die Sicht eines optischen Mittels zum Messen der Verformung angepasst ist.

2. Baugruppe nach Anspruch 1, **dadurch gekennzeichnet, dass** das Gehäuse (20) eine Quarzröhre ist.

3. Baugruppe nach Anspruch 1 oder 2, **dadurch gekennzeichnet, dass** sie darüber hinaus ein transparentes Wärmeisolierelement (101) an der Peripherie der Probe umfasst.

4. Baugruppe nach Anspruch 3, **dadurch gekennzeichnet, dass** das transparente Wärmeisolierelement (101) aus Saphir ist.

5. Baugruppe nach Anspruch 3, **dadurch gekennzeichnet, dass** das transparente Wärmeisolierelement (101) aus Glas ist.

6. Baugruppe nach Anspruch 3, **dadurch gekennzeichnet, dass** das transparente Wärmeisolierelement (101) aus Diamant ist.

7. Baugruppe nach einem der vorherigen Ansprüche, **dadurch gekennzeichnet, dass** sie darüber hinaus einen Wärmetauscher (40) umfasst, wobei sich die zweiten Induktionsmittel (32) an der Peripherie des Wärmetauschers befinden, wobei der Wärmetauscher (40) ein(e) transparente(s) Aussparung oder Fenster (41) umfasst, wobei das eine oder das andere an die Sicht eines Mittels zum Messen der Verformung angepasst ist.

## Claims

1. An assembly comprising a sample (100) and a device for generating a high temperature gradient in said sample, comprising:
- a chamber (20) inside which said sample is placed;
- a resistor (60) passing through said sample;
- first inductive means (31) at the periphery of the chamber (20) for creating an electromagnetic field;
- second inductive means (32) that are arranged inside the chamber (20), connected to the resistor (60), and that are capable of picking up said electromagnetic field so as to make an induced current flow in said resistor;
**characterised in that** the chamber is transparent at visible wavelengths and that the first inductive means comprise at least one first coil comprising coil elements (or windings) at least certain of which are spaced apart by a distance (d) of 2 mm, this spacing being configured to allow an optical means for measuring deformation to be targeted.

2. The assembly according to Claim 1, **characterised in that** the chamber (20) is a quartz tube.

3. The assembly according to either of Claims 1 or 2, **characterised in that** it further comprises a transparent thermally insulating element (101) at the periphery of said sample.

4. The assembly according to Claim 3, **characterised in that** the transparent thermally insulating element (101) is made of sapphire.

5. The assembly according to Claim 3, **characterised in that** the transparent thermal insulator (101) is made of glass.

6. The assembly according to Claim 3, **characterised in that** the transparent thermal insulator (101) is made of diamond.

7. The assembly according to any of the preceding claims, **characterised in that** it further comprises an exchanger (40), said second inductive means (32) being located at the periphery of said exchanger, the exchanger (40) comprising a slit or a transparent window (41), either one being configured to allow a means for measuring deformation to be targeted.
